# EUROPEAN PATENT APPLICATION

(11) **EP 4 597 703 A1**
(43) Date of publication of application: **06.08.2025**
(21) Application number: 25153232.1
(22) Date of filing: 22.01.2025
(51) Int. Cl.: H01M 50/211, H01M 50/507, H01M 50/517

(54) **BATTERY STRUCTURE AND BATTERY MODULE**

(30) Priority: 02.02.2024 TW 113104171
(71) Applicant: Prologium Technology Co., Ltd., Taoyuan City 32023 (TW)
(72) Inventor: Lee, Cheng-Chih, 320023 Taoyuan City (TW); Wu, Meng-Hung, 320023 Taoyuan City (TW)
(74) Representative: Straus, Alexander

(57) **Abstract**

A battery structure (10) includes an upper sheet member (100), a lower sheet member (102), a plurality of battery cells (104), a plurality of fixing members (106), an upper accommodating plate (108) and a lower accommodating plate (110). The battery cells (104) have a plurality of conductive portions (1040) located between the upper sheet member (100) and the lower sheet member (102). The fixing members (106) are configured to fix the upper sheet member (100) and the lower sheet member (102). The upper accommodating plate (108) has an upper accommodating recess (1080). The upper accommodating recess (1080) is configured to accommodate the upper sheet member (100) and a part of the conductive portions (1040). The lower accommodating plate (110) has a lower accommodating recess (1100). The lower accommodating recess (1100) is configured to accommodate the lower sheet member (102) and another part of the conductive portions (1040).

## Description

### Field of the Invention

The present invention relates to a battery structure and a battery module, particularly a battery structure with replaceable battery cells and a battery module equipped with the battery structure.

### Background of the Invention

A battery pack is an important component in an electric vehicle. In general, the battery pack includes a plurality of battery modules and the battery cells in the battery module are fixed by screws and welding structures, such that the battery cells are not easy to disassemble. Furthermore, the welding structures may easily cause damage to the battery cells during disassembly. Thus, the battery module of the prior art are not easy to repair and recycle. How to improve the convenience of disassembling the battery module has become a significant design issue.

### Summary of the Invention

The present invention aims at providing a battery structure with replaceable battery cells and a battery module equipped with the battery structure, thereby resolving the aforesaid problems.

This is achieved by a battery structure according to claim 1 and a battery module according to claim 8. The dependent claims pertain to corresponding further developments and improvements.

As will be seen more clearly from the detailed description following below, the claimed battery structure includes an upper sheet member, a lower sheet member, a plurality of battery cells, a plurality of fixing members, an upper accommodating plate and a lower accommodating plate. The plurality of battery cells has a plurality of conductive portions. The plurality of conductive portions are located between the upper sheet member and the lower sheet member. The plurality of fixing members are configured to fix the upper sheet member and the lower sheet member. The upper accommodating plate has an upper accommodating recess. The upper accommodating recess is configured to accommodate the upper sheet member and a part of the plurality of conductive portions. The lower accommodating plate has a lower accommodating recess. The lower accommodating recess is configured to accommodate the lower sheet member and another part of the plurality of conductive portions.

As will be seen more clearly from the detailed description following below, the claimed battery module includes a plurality of battery structures and a plurality of plate members. The plurality of battery structures are stacked with each other. Each of the plurality of battery structures includes an upper sheet member, a lower sheet member, a plurality of battery cells, a plurality of fixing members, an upper accommodating plate and a lower accommodating plate. The plurality of battery cells has a plurality of conductive portions. The plurality of conductive portions are located between the upper sheet member and the lower sheet member. The plurality of fixing members are configured to fix the upper sheet member and the lower sheet member. The upper accommodating plate has an upper accommodating recess. The upper accommodating recess is configured to accommodate the upper sheet member and a part of the plurality of conductive portions. The lower accommodating plate has a lower accommodating recess. The lower accommodating recess is configured to accommodate the lower sheet member and another part of the plurality of conductive portions. The plurality of plate members surround the plurality of battery structures.

### Brief Description of the Drawings

In the following, the invention is further illustrated by way of example, taking reference to the accompanying drawings thereof:
FIG. 1 is a perspective view illustrating a battery module according to an embodiment of the invention,
FIG. 2 is a partial perspective view illustrating a battery structure,
FIG. 3 is a partial exploded view illustrating the battery structure,
FIG. 4 is a partial exploded view illustrating the battery structure from another viewing angle,
FIG. 5 is another partial perspective view illustrating the battery structure,
FIG. 6 is another partial perspective view illustrating the battery structure,
FIG. 7 is a partial perspective illustrating a plate member,
FIG. 8 is a partial perspective view illustrating the upper sheet member and the lower sheet member according to another embodiment of the invention, and
FIG. 9 is a partial perspective view illustrating the upper sheet member and the lower sheet member according to another embodiment of the invention.

### Detailed Description

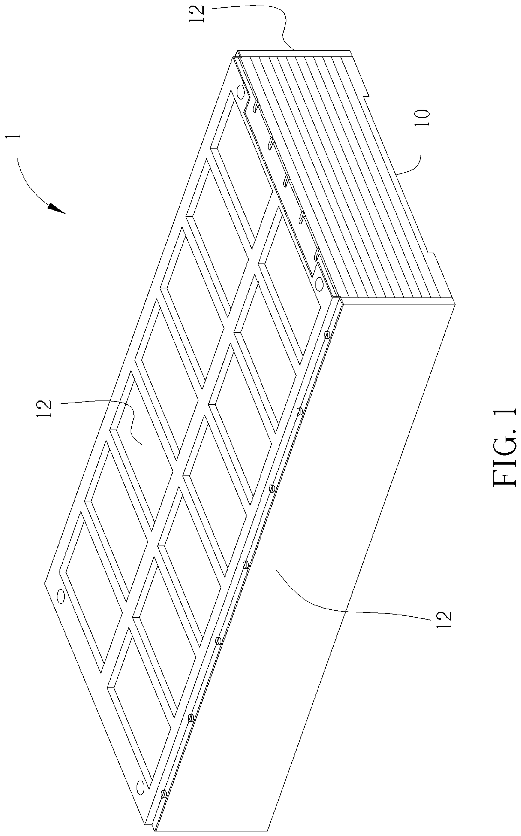

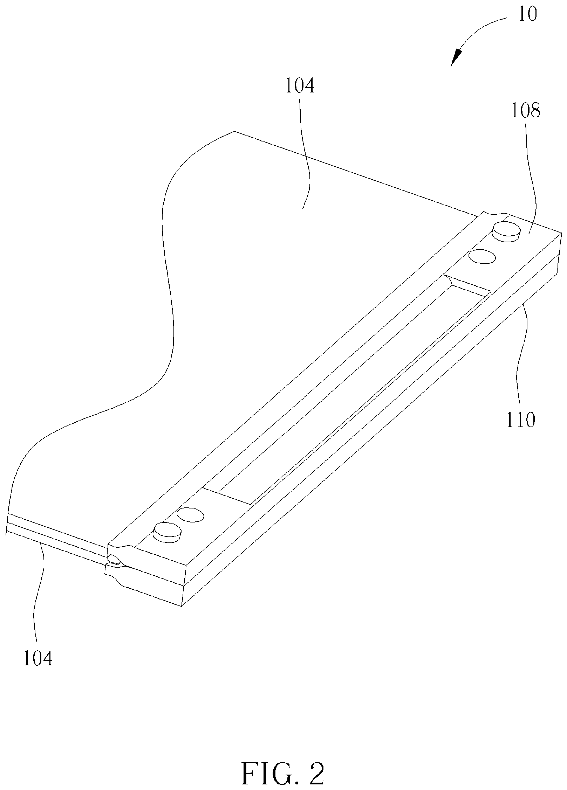

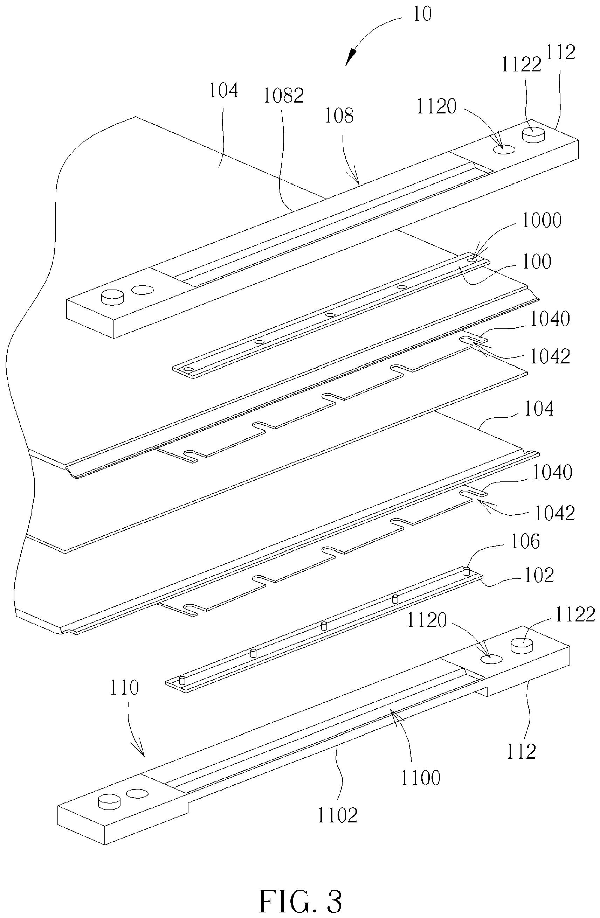

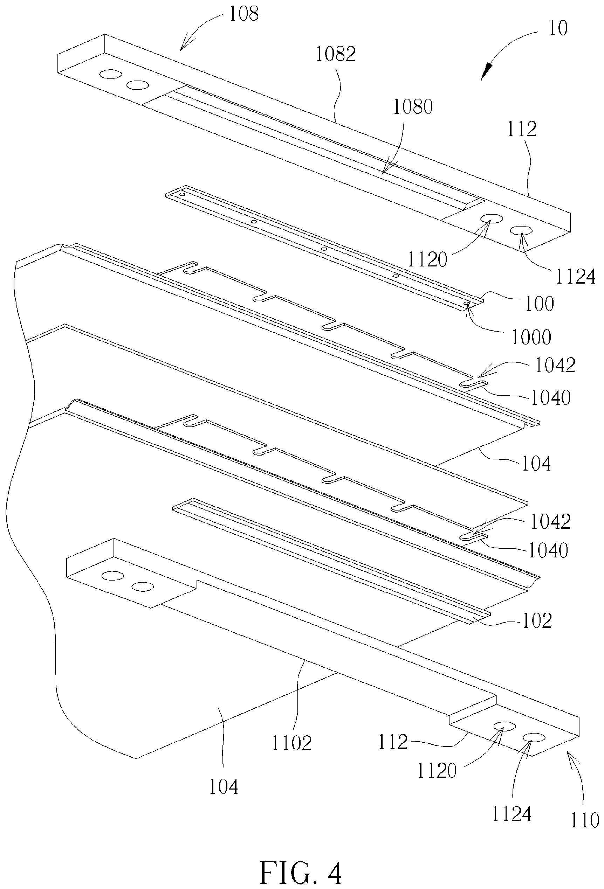

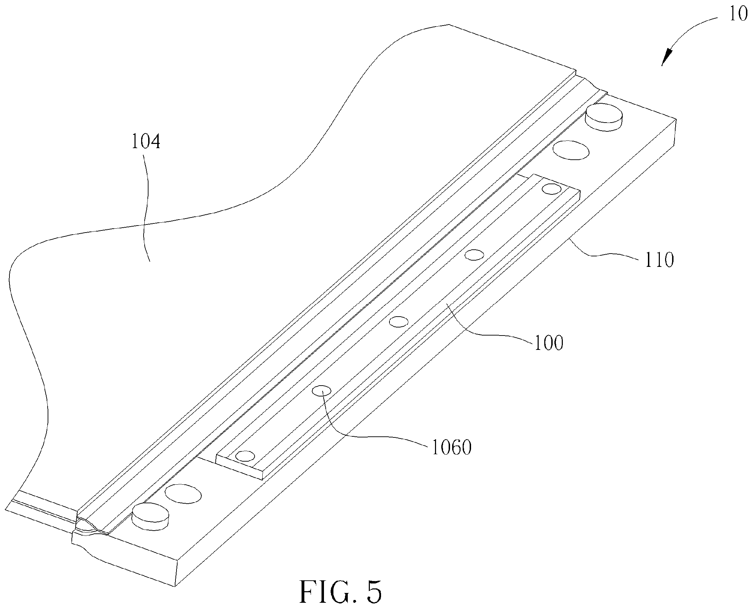

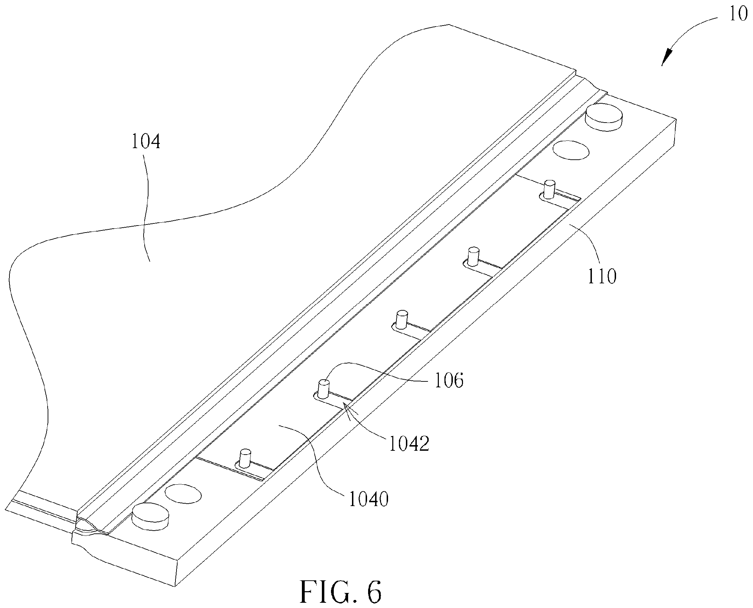

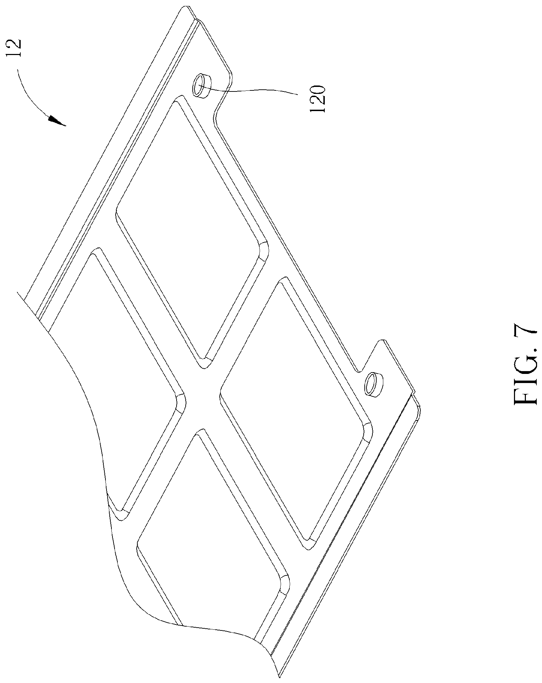

Referring to FIGs. 1 to 7, FIG. 1 is a perspective view illustrating a battery module 1 according to an embodiment of the invention, FIG. 2 is a partial perspective view illustrating a battery structure 10, FIG. 3 is a partial exploded view illustrating the battery structure 10, FIG. 4 is a partial exploded view illustrating the battery structure 10 from another viewing angle, FIG. 5 is another partial perspective view illustrating the battery structure 10, FIG. 6 is another partial perspective view illustrating the battery structure 10, and FIG. 7 is a partial perspective illustrating a plate member 12.

As shown in FIG. 1, the battery module 1 includes a plurality of battery structures 10 and a plurality of plate members 12. The plurality of battery structures 10 are stacked with each other, and the plurality of plate members 12 surround the plurality of battery structures 10, so as to form the battery module 1. The battery module 1 may be applied to an electric vehicle, but the invention is not so limited. The number of battery structures 10 may be determined according to practical applications, so the invention is not limited to the embodiment shown in the figure.

As shown in FIGs. 2 to 4, the battery structure 10 includes an upper sheet member 100, a lower sheet member 102, a plurality of battery cells 104, a plurality of fixing members 106, an upper accommodating plate 108 and a lower accommodating plate 110. The plurality of battery cells 104 have a plurality of conductive portions 1040, and the plurality of conductive portions 1040 are located between the upper sheet member 100 and the lower sheet member 102. In other words, the conductive portions 1040 of the battery cells 104 are clamped between the upper sheet member 100 and the lower sheet member 102 to form electrical connection. In another embodiment, foam or similar structures may be disposed between the battery cells 104 to provide a buffering effect. In this embodiment, the battery structure 10 may include two battery cells 104 and opposite sides of each battery cell 104 may include two conductive portions 1040, wherein the conductive portion 1040 may be a positive conductive portion or a negative conductive portion. It should be noted that, for purpose of illustration, only the conductive portion 1040, the upper sheet member 100, the lower sheet member 102, the fixing members 106, the upper accommodating plate 108 and the lower accommodating plate 110 located at one side of the battery cells 104 are shown in the figures.

The plurality of fixing members 106 are configured to fix the upper sheet member 100 and the lower sheet member 102. In this embodiment, each of the plurality of conductive portions 1040 has a plurality of through holes 1042, and the plurality of fixing members 106 can pass through the plurality of through holes 1042 to fix the upper sheet member 100 and the lower sheet member 102. In this embodiment, the plurality of fixing members 106 may be a plurality of riveting members, but the invention is not so limited. When the fixing members 106 are riveting members, at least one of the upper sheet member 100 and the lower sheet member 102 may have a plurality of riveting holes. Furthermore, the plurality of fixing members 106 may be integrally formed on one of the upper sheet member 100 and the lower sheet member 102. In this embodiment, the plurality of fixing members 106 may be integrally formed on the lower sheet member 102. At this time, the upper sheet member 100 may have a plurality of riveting holes 1000, wherein each of the plurality of riveting holes 1000 tapers from a side away from the conductive portion 1040 to a side close to the conductive portion 1040.

During assembly, the riveting members (i.e. the fixing members 106) may sequentially pass through the through holes 1042 of the conductive portion 1040 and the riveting holes 1000 of the upper sheet member 100 to rivet the upper sheet member 100 and the lower sheet member 102. As shown in FIG. 5, after the riveting members rivet the upper sheet member 100 and the lower sheet member 102, a first surface 1060 of each of the riveting members may be coplanar with the upper sheet member 100 to avoid interference with other components.

In another embodiment, the fixing members 106 may also be integrally formed on the upper sheet member 100 or may be independent components. At this time, the lower sheet member 102 may also have a plurality of riveting holes. After the riveting members pass through the riveting holes of the lower sheet member 102 to rivet the upper sheet member 100 and the lower sheet member 102, a second surface of each of the riveting members is coplanar with the lower sheet member 102.

When the fixing members 106 are riveting members, the fixing members 106 may be solid rivets, hollow rivets, hollow rivets with a groove, or general rivets according to practical applications.

As shown in FIG. 6, a width of each of the through holes 1042 of the conductive portion 1040 may be larger than a width of each of the fixing members 106, such that the fixing members 106 are not in contact with the conductive portions 1040. Accordingly, the invention can prevent the battery cells 104 from being damaged when disassembling the fixing members.

As shown in FIGs. 3 and 4, the upper accommodating plate 108 has an upper accommodating recess 1080 and the lower accommodating plate 110 has a lower accommodating recess 1100. After the fixing members 106 fix the conductive portions 1040 of the battery cells 104 between the upper sheet member 100 and the lower sheet member 102, the upper accommodating recess 1080 is configured to accommodate the upper sheet member 100 and a part of the conductive portions 1040, and the lower accommodating recess 1100 is configured to accommodate the lower sheet member 102 and another part of the conductive portions 1040. Accordingly, the upper accommodating plate 108 and the lower accommodating plate 110 can not only support the upper sheet member 100 and the lower sheet member 102, but also provide insulation protection, so as to prevent the upper sheet member 100 and the lower sheet member 102 of two adjacent battery structures 10 from being short-circuited due to contact.

In this embodiment, the upper accommodating plate 108 may include a first middle portion 1082 and the upper accommodating recess 1080 may be located in the first middle portion 1082, wherein a short side of the upper accommodating recess 1080 may be shorter than a short side of the first middle portion 1082. Furthermore, the lower accommodating plate 110 may include a second middle portion 1102 and the lower accommodating recess 1100 may be located in the second middle portion 1102, wherein a short side of the lower accommodating recess 1100 may be shorter than a short side of the second middle portion 1102.

In this embodiment, each of two sides of the first middle portion 1082 has a side portion 112, and each of two sides of the second middle portion 1102 also has the side portion 112. The side portion 112 may have an assembly hole 1120, a positioning protrusion 1122 and a positioning hole 1124, wherein the positioning protrusion 1122 and the positioning hole 1124 are located at two opposite sides of the upper accommodating plate 108 or the lower accommodating plate 110. Furthermore, the assembly hole 1120 is adjacent to the positioning protrusion 1122 and adjacent to the positioning hole 1124. When assembling the upper accommodating plate 108 and the lower accommodating plate 110, the positioning protrusion 1122 of one of the upper accommodating plate 108 and the lower accommodating plate 110 may be inserted into one of the assembly hole 1120 and the positioning hole 1124 of another one of the upper accommodating plate 108 and the lower accommodating plate 110. Accordingly, the upper accommodating plate 108 and the lower accommodating plate 110 of two adjacent battery structures 10 may be positioned with each other.

It should be noted that, in this embodiment, two adjacent battery structures 10 may share the upper accommodating plate 108 or the lower accommodating plate 110. For further explanation, the lower accommodating plate 110 of the upper battery structure 10 may be the upper accommodating plate 108 of the lower battery structure 10, and conversely, the upper accommodating plate 108 of the lower battery structure 10 may be the lower accommodating plate 110 of the upper battery structure 10.

In this embodiment, at least one of the plate members 12 may have at least one assembly protrusion 120, as shown in FIG. 7. After the battery structures 10 are stacked with each other, the assembly protrusion 120 may be inserted into one of the assembly hole 1120 and the positioning hole 1124 of the upper accommodating plate 108 or the lower accommodating plate 110, so as to complete the assembly of the battery module 1. In this embodiment, the plate members 12 may include two cover plates and two side plates. The two cover plates may be assembled with one of the assembly hole 1120 and the positioning hole 1124 of the upper accommodating plate 108 or the lower accommodating plate 110 by the aforesaid assembly protrusion 120. Furthermore, the two cover plates may be assembled with the two side plates by other fixing members (e.g. screws).

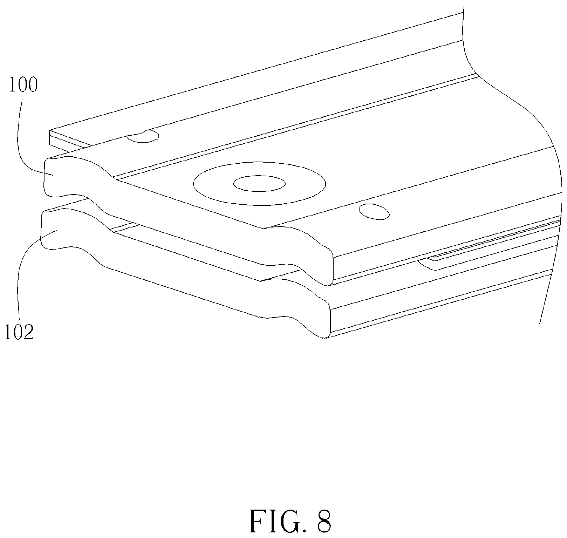

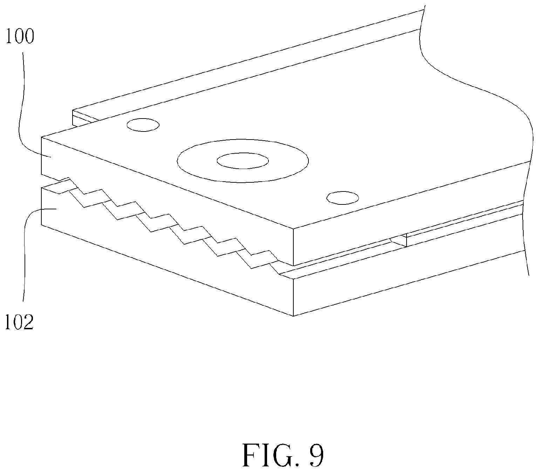

Referring to FIGs. 8 and 9, FIG. 8 is a partial perspective view illustrating the upper sheet member 100 and the lower sheet member 102 according to another embodiment of the invention, and FIG. 9 is a partial perspective view illustrating the upper sheet member 100 and the lower sheet member 102 according to another embodiment of the invention.

As shown in FIGs. 8 and 9, the surfaces of the upper sheet member 100 and the lower sheet member 102 facing each other may be non-planar (e.g. curved, jagged, etc.), such that the contact between the conductive parts 1040 of the battery cells 104 is better and the impedance is lower. Needless to say, the surfaces of the upper sheet member 100 and the lower sheet member 102 facing each other may also be planar (as shown in FIG. 2) according to practical applications.

As mentioned in the above, the invention utilizes the upper sheet member and the lower sheet member to clamp the conductive portions of the battery cells and utilizes the fixing members to fix the upper sheet member and the lower sheet member. Then, the invention utilizes the upper accommodating plate and the lower accommodating plate to accommodate the upper sheet member, the lower sheet member and the conductive portions, so as to complete the assembly of the battery structure. When the battery cells needs to be disassembled, only the fixing members needs to be removed. Since the battery cells are not fixed by welding, the invention can prevent the battery cells from being damaged during disassembly. Furthermore, since the battery cells are not fixed by screws, the invention can avoid poor contact of the battery cells caused by loose screws.

## Claims

1. A battery structure (10) **characterized by** the battery structure (10) comprising:
an upper sheet member (100);
a lower sheet member (102);
a plurality of battery cells (104), the plurality of battery cells (104) having a plurality of conductive portions (1040), the plurality of conductive portions (1040) being located between the upper sheet member (100) and the lower sheet member (102);
a plurality of fixing members (106) configured to fix the upper sheet member (100) and the lower sheet member (102);
an upper accommodating plate (108) having an upper accommodating recess (1080), the upper accommodating recess (1080) being configured to accommodate the upper sheet member (100) and a part of the plurality of conductive portions (1040); and
a lower accommodating plate (110) having a lower accommodating recess (1100), the lower accommodating recess (1100) being configured to accommodate the lower sheet member (102) and another part of the plurality of conductive portions (1040).

2. The battery structure (10) of claim 1 further **characterized in that** each of the plurality of conductive portions (1040) has a plurality of through holes (1042), and the plurality of fixing members (106) pass through the plurality of through holes (1042) to fix the upper sheet member (100) and the lower sheet member (102).

3. The battery structure (10) of claim 2 further **characterized in that** a width of each of the plurality of through holes (1042) is larger than a width of each of the plurality of fixing members (106), such that the plurality of fixing members (106) are not in contact with the plurality of conductive portions (1040).

4. The battery structure (10) of claim 2 further **characterized in that** the plurality of fixing members (106) are a plurality of riveting members, at least one of the upper sheet member (100) and the lower sheet member (102) has a plurality of riveting holes (1000), each of the plurality of riveting holes (1000) tapers from a side away from the conductive portion (1040) to a side close to the conductive portion (1040), and the plurality of riveting members pass through the plurality of riveting holes (1000) to rivet the upper sheet member (100) and the lower sheet member (102).

5. The battery structure (10) of claim 4 further **characterized in that** a first surface (1060) of each of the plurality of riveting members is coplanar with the upper sheet member (100), and a second surface of each of the plurality of riveting members is coplanar with the lower sheet member (102).

6. The battery structure (10) of claim 1 further **characterized in that** the plurality of fixing members (106) are integrally formed on one of the upper sheet member (100) and the lower sheet member (102).

7. The battery structure (10) of claim 1 further **characterized in that** surfaces of the upper sheet member (100) and the lower sheet member (102) facing each other are non-planar.

8. A battery module (1) **characterized by** the battery module (1) comprising:
a plurality of battery structures (10) of any of claims 1 to 7 stacked with each other; and
a plurality of plate members (12) surrounding the plurality of battery structures (10).

9. The battery module (1) of claim 8 further **characterized in that** the upper accommodating plate (108) comprises a first middle portion (1082), the upper accommodating recess (1080) is located in the first middle portion (1082), each of two sides of the first middle portion (1082) has a side portion (112), the lower accommodating plate (110) comprises a second middle portion (1102), the lower accommodating recess (1100) is located in the second middle portion (1102), each of two sides of the second middle portion (1102) also has the side portion (112), the side portion (112) has an assembly hole (1120), a positioning protrusion (1122) and a positioning hole (1124), the positioning protrusion (1122) and the positioning hole (1124) are located at two opposite sides of the upper accommodating plate (108) or the lower accommodating plate (110), the assembly hole (1120) is adjacent to the positioning protrusion (1122) and adjacent to the positioning hole (1124), and the positioning protrusion (1122) of one of the upper accommodating plate (108) and the lower accommodating plate (110) is inserted into one of the assembly hole (1120) and the positioning hole (1124) of another one of the upper accommodating plate (108) and the lower accommodating plate (110).

10. The battery module (1) of claim 9 further **characterized in that** a short side of the upper accommodating recess (1080) is shorter than a short side of the first middle portion (1082), and a short side of the lower accommodating recess (1100) is shorter than a short side of the second middle portion (1102).

11. The battery module (1) of claim 9 further **characterized in that** at least one of the plurality of plate members (12) has at least one assembly protrusion (120), and the at least one assembly protrusion (120) is inserted into one of the assembly hole (1120) and the positioning hole (1124).
